Europäisches Patentamt

European Patent Office

Office européen des brevets

(19)

(11) Publication number: **0 232 450**
**A2**

(12) # EUROPEAN PATENT APPLICATION

(21) Application number: **86105767.7**

(22) Date of filing: **23.06.83**

(51) Int. Cl.⁴: **F16J 15/34** , B29C 33/00 , B29B 9/00 , C08L 81/02

(30) Priority: **02.07.82 US 393621**
**29.10.82 US 437543**

(43) Date of publication of application:
**19.08.87 Bulletin 87/34**

(60) Publication number of the earlier application in accordance with Art.76 EPC: **0 099 009**

(84) Designated Contracting States:
**AT BE CH DE FR GB IT LI LU NL SE**

(71) Applicant: **A.W. CHESTERTON COMPANY**
**Middlesex Industrial Park Route 93**
**Stoneham Massachusetts 02180(US)**

(72) Inventor: **Bernier, Edgar R.**
**179 Chestnut Street**
**Nashua New Hampshire 03060(US)**

(74) Representative: **Heidrich, Udo, Dr. jur.,**
**Dipl.-Phys.**
**Franziskanerstrasse 30**
**D-8000 München 80(DE)**

(54) **Mechanical seal.**

(57) Mechanical seal, comprising a driver, a seal portion and means for attaching said seal to a shaft arranged so as not to dimple or mark the shaft, **characterized** in that
said means for attaching is a clamp having an angled inner wall and being connected to said driver by adjustable means, the adjustment thereof forces said angled wall against the shaft so that said angled wall deforms against the shaft.

EP 0 232 450 A2

## MECHANICAL SEAL

This invention relates to mechanical seals for rotating shafts, and a method of making such seals.

Packing seals and mechanical seals are two types of seals used to prevent leakage around a rotating shaft.

The prior art packing seal consists of packing material wrapped around the shaft and compressed so as to provide a tight fit against it. As the packing seal is stationary while the shaft rotates, the seal places a great deal of drag on the shaft and will wear the shaft away over a period of time. The worn shaft must then be replaced at considerable cost.

The prior art mechanical seal overcomes some of the packing seal drawbacks. These prior art mechanical seals fit over the shaft, and a driver of the seal is held thereto by set screws so that the driver rotates with the shaft. The area between the shaft and the seal is sealed by conventional means, e.g., O-rings, while the flow path around the outside of the mechanical seal is closed by forcing a thin graphite lip of a seal portion of the mechanical seal against a stationary ceramic collar mounted around but not connected to the shaft. Because of the high speed of rotation of the shaft and the seal, the continual pressure of the seal against the ceramic collar, and the high temperature to which the seal is often subjected, the prior art mechanical seal must be very strong. Moldable materials such as plastic or plastic and some graphite do not produce a seal strong enough to be used, and accordingly, the prior art seal is usually made entirely of steel, except for the small graphite lip. As a result, the prior art mechanical seals are very expensive, which expense is increased if the seal must be specially fabricated for a non-standard size shaft. Furthermore, some liquids, e.g., some acids and salt water, will attack steel and other metals, and for those applications, a packing seal must be used instead.

Another drawback is that the set screws, which hold the prior art mechanical seal in place, dimple the shaft. If a packing seal is later used on the same shaft, the dimples will tear up the packing material as the shaft rotates.

It has been discovered that an improved mechanical seal can be made by molding a driver of the seal of a resin compound including carbon and molding a seal portion of a graphite with a small percentage of a resin compound, the resulting parts having substantial strength and very similar coefficients of expansion. In addition, it has been discovered that an adjustable clamping means comprising a collar of the carbon and resin compound can be attached to hold the driver to the shaft without any dimpling of the shaft.

In the preferred embodiment, the driver portion is made of a mixture of 60% of a compound based on RYTON®, a polyphenylene sulfide resin, and 40% carbon filler, which mixture is melted, forced into a mold heated to a temperature of 300°F, and then solidified. The seal portion is made of a mixture of 90% graphite powder and 10% phenolic resin, which mixture is also compression molded to a carbon lip which acts as a sealing face when the seal is in operation. Both the driver and seal portion are then post-cured at temperatures of 200 °C and 175 °C respectively for a period of hours so as to cross-link the molecules to create a stronger bond between them and give added strength to the parts. The clamping means for the preferred embodiment comprises as series of separate fingers on the driver, all of which are engaged by a split collar, which when attached, compress all the fingers against the shaft.

In another preferred embodiment, the seal portion and the lip are both compression molded out of the graphite and resin compound, and the clamp has a sloped interior wall that grasps but does not dimple the shaft.

We now turn to a description of the preferred embodiments, after first briefly describing the drawings.

Figure 1 is a perspective view of a mechanical seal of this invention;

Figure 2 is a cross-sectional view of a mechanical seal of this invention mounted on a pump shaft;

Figure 3 is an enlarged perspective view of a driver of the seal of one embodiment of the invention;

Figure 4 is an enlarged perspective view of one embodiment of a clamp of the driver;

Figure 5 is an enlarged perspective view of one embodiment of the seal portion of this invention;

Figure 6 is an enlarged perspective view of a simplified mold for the parts of the mechanical seal of this invention;

Figure 7 is an exploded view of the preferred embodiment of this invention; and

Figure 8 is a partial cross sectional view of the preferred embodiment.

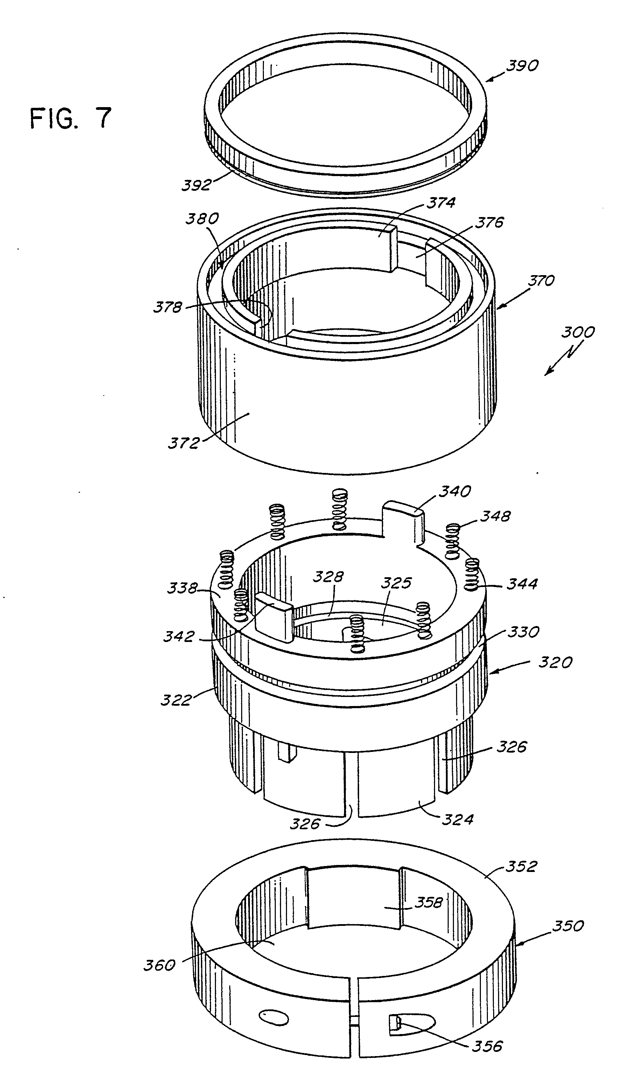

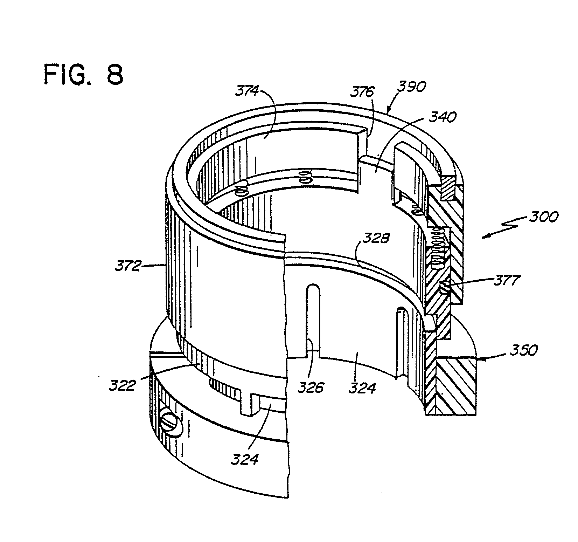

Referring to Figures 7 and 8, the preferred embodiment of a mechanical seal of this invention is shown at 300. The seal 300 generally comprises a driver 320 and a seal portion 370.

As shown best in Figure 7, the driver 320 comprises a cylindrical wall 322 having a series of five long fingers 324, and a truncated finger 325 extending downwardly therefrom. The fingers are curved to fit around the shaft (not shown) to be sealed, and they are separated by gaps 326 about 60° apart. A first annular O-ring groove 328 is disposed around the interior of the wall 322, and a second annular O-ring groove 330 is disposed around its outside. A top surface 338 of the driver 320 has a pair of tabs 340, 342 extending upwardly therefrom. The tabs 340, 342 are positioned 180° apart. A series of spring holes 344 are disposed in the top surface 338.

The driver 320 is injection molded in an integral piece of a compound which is primarily carbon and resin. As will hereinafter be explained, the injection molding is done so that all or almost all of the various parts of the driver 320 are integral. This is because any machining of the resin will cut away at least a portion of the resin-rich outer surface, which results in a weaker (more brittle) part. Accordingly, any machining should be kept to a minimum.

The base resin used is BR-31 (Ryton ®) from Phillips Chemical Company of Houston, Texas. The BR-31 is a polyphenylene sulfide resin, but unlike other polyphenylene sulfides, parts from this particular type of polyphenylene sulfide have more durability without internal cracking due to differential shrinkage. Also, this particular resin is not corroded by most acids or other corrosion-inducing liquids, e.g., salt water.

The base resin is then turned into a compound. Initially, a sheet of the base resin is formed, and carbon fibers, which are chopped strands about 0,65 cm long, are pressed onto the top surface of the sheet. Usually, a resinous, phenolic blend of sizing is first applied to the carbon fibers to aid the fibers compatability with the base resin and to make handling of the fibers and molding easier. As the carbon fibers are distributed evenly over the surface of the sheet, the sheet is then cut into small chips, each of which has the same percentage of carbon and resin. In the preferred embodiment, carbon is about 40% of each chip by weight.

The chips of the carbon and resin sheet are fed into an extruder and melted at temperatures between 300 °C and 355 °C. The total dwell time is five minutes, as any longer will adversely affect the material. The resulting strands from the extruder are chopped into pellets for further compounding, which involves adding a number of other materials. In the preferred embodiment, fiberglass - (chopped 0,65 cm strands of E type glass) is added after being treated with a silane coupling agent which aids in obtaining a strong bond between the fiberglass and the rest of the compound.

Concentrated pellets of polyphenylene sulfide with a black dye pigment are also added, along with a micro-fine channel black and a coarser bone black. These carbon blacks are added in equal amounts. Calcium metasilicate (a high purity grade of Wollastonite®) and calcium stearate (molding grade) are also added.

In the preferred embodiment, the BR-31 resin amounts to between 50% and 75%, of the compound by weight, and generally is about 60% or somewhat less. The carbon fiber is between .25% and 50% of the compound by weight, and generally is about 40% or somewhat less. Preferably, the fiberglass is usually about 5% by weight, although it may constitute as much as 50% of the total. The silane coupling agent is .25% to 2% of the fiberglass by weight, and the sizing is between 2% and 5% of the carbon fiber by weight. The carbon blacks (both together) and the calcium metasilicate are all .25% to 5% of the resin by weight, while the pigment is between .25% and 4% of the resin by weight, and the calcium stearate is between .25% and 2% of the resin by weight.

In addition certain other fiberous and non-fibrous reinforcements may be usd in the compound. These include boron, asbestos, polybenzimidazole fiber (all fibrous), and talcs, glass microspheres, clays, calcium carbonate, TEFLON® and other carbon blacks (all non-fibrous).

When the additives have been blended together, this carbon and resin compound is kept tumbling and drying in an air-circulating, heated hopper to exclude moisture until the compound is ready for injection molding.

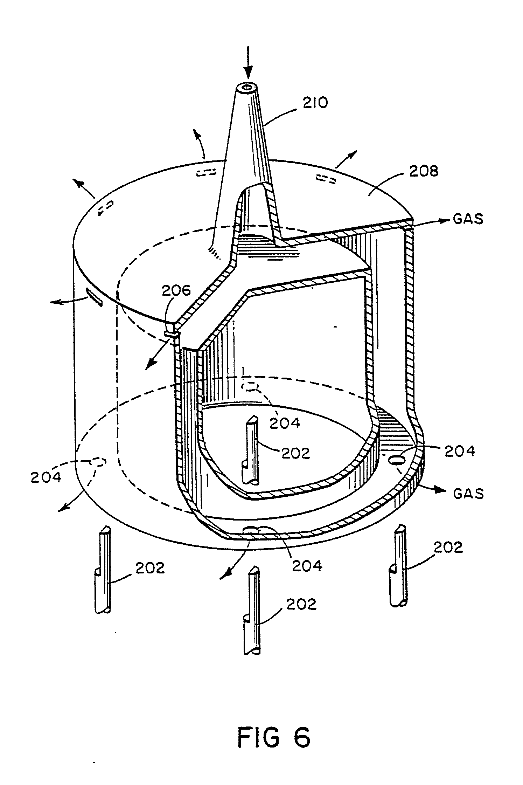

The pellets of the carbon and resin compound are then injected into a mold by feeding the pellets into the screw of the machine through which they are moved through a barrel heated to 257 °C to 312 °C (nozzle temperature) in steps of 7 °C or 10 °C, depending upon the number of heating zones. The injection pressure is 150 pounds when using a Trueblood 110 ton machine produced by US company Trueblood, and the mold itself is initially heated to 150 °C ± 5 °C. This mold heating is to assure that the liquified compound will flow through the entire mold and fill it completely. A reduced mold temperature, e.g., under 120 °C, is not desirable, as the appearance and physical properties of the resulting driver may be adversely affected, and an uneven mold temperature may mean that all the cavities will not fill completely. Accordingly, the mold heating rods or oil passages (not shown in Figure 6) must also be located around the extreme mold areas and any other areas which may fill slowly or last to hold temperature throughout the mold at 150 °C ± 5 °C for the filling process. The mold itself must be vented, contrary to the usual venting in the prior art thermoplastic molding processes, to eliminate all interior gases, the presence of which might cause the resulting part to have varying densities or blowholes, both of which are potential sources of stress failure.

As shown in a simplified mold 200 for this invention of Figure 6, mold venting is accomplished in two unconventional ways. First, in the usual molding process, round ejector pins are used to aid in removing the finished product from the mold. In molding a circular ring or a cylinder, four or so pins would usually be located symmetrically around the bottom (bottom edge in the case of a cylinder), and would force the piece up out of the mold when the piece had hardened. With this invention, ejector pins 202 are flattened, at least where they enter round holes 204 for them in the bottom of the mold 200, so that air and other gases can escape from the mold by the flattened pins. Secondly, there are at least four (and many more if the piece is relatively large, e.g., a 15 cm diameter cylinder or ring) venting ports 206 spaced symmetrically around the outside of the mold. These ports 206 are located around the top of the mold 200 opposite the ejector pins 202, and the ports 206 are typically 0,65 cm wide and 0,1 mm high. At least one additional port (none shown) is placed in the areas where there may be a particularly significant gas build-up in the mold, e.g., deep grooves, holes and undercuts. The additional ports would be placed on the edges of such areas.

Also, to fill the entire mold substantially at once, the mold 200 is filled using a 360° ring gate 208 (rather than a few individual conduits) fed by a sprue 210, which is round and of highly polished steel with a minimum length, has a taper of at least half an inch per foot. The ring gate 208 is usually about one third the thickness of the part to be made. The ring gate 208 is attached to the mold at the top across from the vents 206.

In operation, the liquid compound flows through the sprue 210 and into the ring gate 208, filling it. Once the ring gate 208 is filled, the compound from the ring gate 208 then feeds into the rest of the mold simultaneously around the entire 360° periphery of the ring gate 208. Gas is forced out of the ports 206 and the portion of the holes 204 not covered by the ejector pins 202. The heating rods near the various cavities in the mold assure that the cavities fill completely. When the mold is filled, water is used externally to reduce the temperature of the mold and the liquid therein, and the composition solidifies.

The driver 320 is then removed from the mold by use of the ejector pins 202 and a reverse taper sprue puller (not shown). The driver is then post-cured for sixteen hours at 202 °C, and the post-curing improves the strength of the driver and its mechanical and chemical resistance properties, as it causes the molecules of the driver 320 to become cross-linked thereby forming very strong bonds between them. It also increases the operating temperature at which the driver 320 will melt.

O-ring grooves 328, 330 and holes 344 may be molded into the unit, or the driver 320 may be machined after the post-curing step to form them. In the latter case, the machining is done at non-critical stress points, and therefore the part is not weakened substantially. Also, it is necessary to remove the material solidified in the gate area as well as any material extending from the ports or the ejector pin holes. Post-curing is again performed after the machining operation.

The compound made for BR-31 resin is very suitable for this use because it can be made into thick-section parts. furthermore, unlike with most other polyphenylene sulfide and carbon based compounds, the resulting part here is not brittle, but instead is highly flexible and can stretch. Thus, the part is much tougher than previous PPS-carbon parts. Also, the BR-31 is highly heat resistant, and the part made from the compound can withstand 257 °C, which is the desirable upper limit for most mechanical seals (i.e., most usual mechanical seal applications involve flows of 147 °C, which means that that is the minimum temperature applied to the seal, as pump operation will raise the temperature of the seal higher than that of the flow itself). Other known resins could be used in the compound, but strength, temperature and corrosion characteristics would be somewhat less and unsatisfactory for some applications.

In order to complete the driver 320, rubber O-rings not shown are inserted into the O-ring grooves 328, 330, and springs 348 are placed in each spring hole 344. The top half of the springs 348, all of which require about thirty-six pounds to compress, extend above the top surface 338 of the driver 320.

As best shown in Figure 7, a clamp 350 is provided for the fingers 324 of the driver 320. The clamp 350 is actually a split ring 352, which is secured together by a screw 356. A projection 358 extends into the inside opening 360 formed by the rings. The projection 358 covers about 60° of the circumference.

The seal portion 370 is best shown in Figure 7. Seal portion 370 generally comprises a cylindrical sidewall 372, the inner diameter of which is slightly greater than the outer diameter of the sidewall 322 of the driver 320. Sidewall 372 has an inwardly disposed flange 374 around its top, and a pair of tab slots 376, 378 are disposed in the flange 374, 180° apart. A seal lip groove 380 is disposed in the top surface of the sidewall 372. Groove 380 is offset from the edges of sidewall 372. A sealing lip 390 is also shown in Figure 7. The lip 390, which forms the seal face for the mechanical seal 300, is commercially available and is almost all carbon with some filters or binders. The lip 390 has a small V-shaped groove 392 around its outer wall

The seal portion 370 and the lip 390 are attached in the molding process for the seal portion 370, which is made of graphite powder and phenolic resin. The graphite powder, which is 99% pure carbon, is mixed with the phenolic resin. The resin makes up about 10% of the total mixture, although up to 20% resin is also satisfactory. The lip 390, after machining to proper tolerance is manually positioned in the mold and pre-heated to 90 °C. The carbon resin mixture is then injected into the mold, and compression molded into the shape of the seal portion 370. The pressure used may vary between 5 and 100 tons. when the seal portion 370 has been formed, it is molded to the lip 390 and the compound in the lip groove 392 prevents the lip from pulling free. The injection molding machine uses a sensitive low pressure closing system to eliminate damage to the lip when the mold is closed. The seal portion is then post-cured at 175 °C for four hours and the lip face may be machined again. As with the driver 320, the post-curing cross-links the molecules, making the part stronger and improving its temperature resistance.

As shown in Figure 8, the seal portion 370 is placed over the top of the driver 320. The driver tabs 340, 342 slide into the tab slots 376, 378 which assure that the seal portion 370 will rotate with the driver 320, and the top of the springs 348 contact the underside of the seal portion flange 374.

The clamp 350 fits over the bottom portion of the fingers 324, with the projection 358 fiting in the space created by the truncated finger 324 so as to prevent rotation of the clamp with respect to the driver 320.

The assembled seal 300 is slipped over a shaft (not shown). The dimensions of the seal are such that the inner diameter of the driver 320 its fingers 324, 325 and the seal portion flange 374 are only slightly larger than the diameter of the shaft. As these seal parts are molded, exact-fitting seals for odd-sized shafts can be easily and inexpensively made. The seal 300 is sealed to the shaft by an O-ring (not shown), and O-ring 377 prevents any leakage between the driver 320 and the seal portion 370. The seal 300 is held in place on the shaft by clamp 350. Tightening the clamp screws 356 independently compresses the fingers 324 against the shaft over almost 360°, and the seal 300 is held firmly in place without dimpling the shaft.

The driver 320 is subject to more stress than the seal portion 370, and it is somewhat stronger. Nevertheless, the coefficient of expansion of the driver 320 and seal portion 370 are almost the same so no leakage results when the parts expand due to use in a high temperature liquid. Also, the driver and seal portion have a substantial resistance to corrosion and high temperature.

Other Embodiments

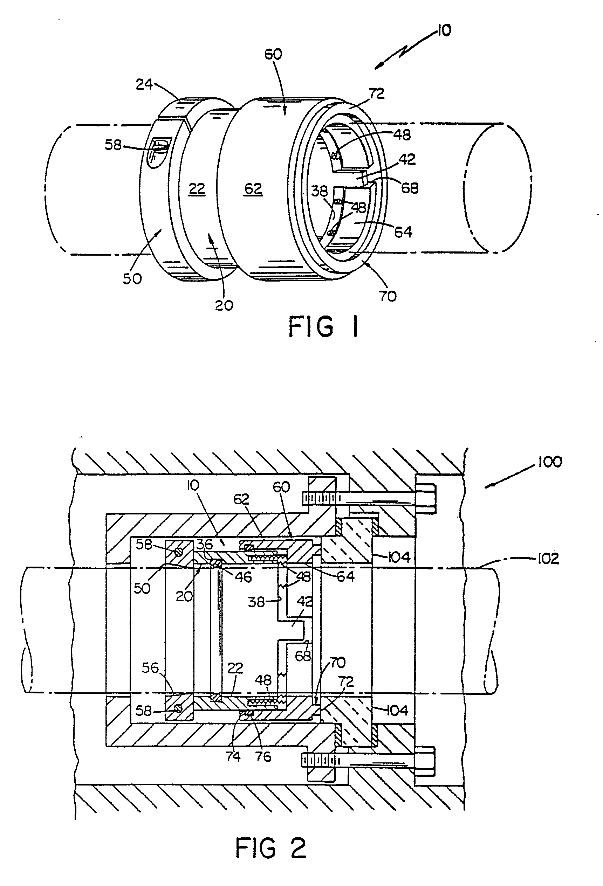

Referring to Figure 1, another mechanical seal according to this invention is shown at 10, and as in the preferred embodiment, the seal 10 generally comprises a driver 20 and a seal portion 60.

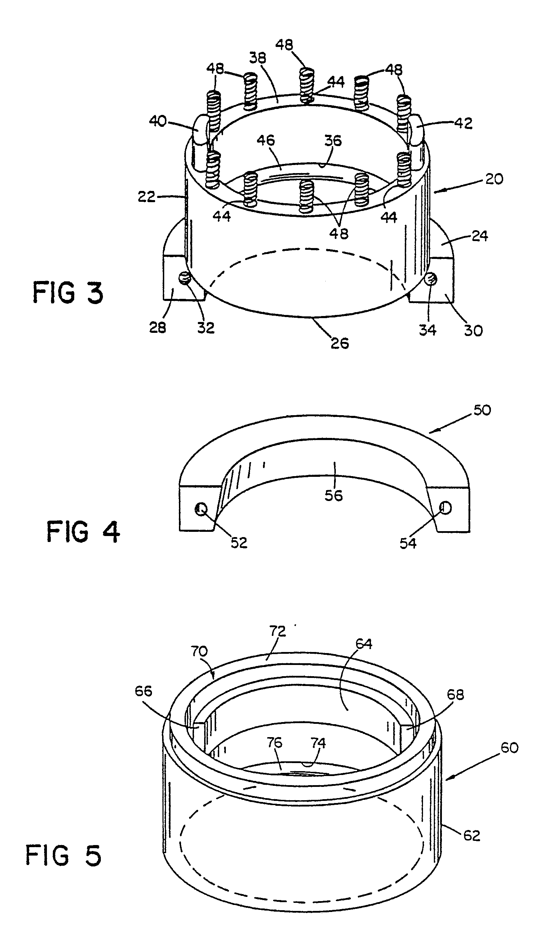

As shown in Figure 3, the driver 20 comprises a cylindrical sidewall 22 having a semi-circular flange 24 extending around half of its lower end 26. Flange 24 has a pair of flat faces 28, 30 which are 180° apart, and screw-threaded holes 32, 34 extend through faces 28, 30 respectively. Each hole 32, 34 extends to open through (not shown) the side of flange 24. An annular O-ring groove 36 is disposed around the inside of the sidewall 22 at its approximate midpoint. A top surface 38 of the driver 20 has a pair of tabs 40, 42 extending upwardly therefrom. The tabs 40, 42 are positioned 180° apart, and ten spring holes 44 are disposed in the top surface 38. The driver 20 is injection molded in the same manner as with the preferred embodiment. O-ring groove 36 and holes 32, 34 and 44 may be molded into the unit, or the driver 20 may be machined after the post-curing step to form them. As with the preferred embodiment the machine is done at non-critical stress points.

In order to complete the driver 20, rubber O-ring 46 is inserted into the O-ring groove 36, and springs 48 are placed in each spring hole 44. The top half of the springs 48, all of which require about thirty-six pounds to compress, extend above the top surface 38.

As best shown in Figure 4, a clamp 50 is provided for the lower end 26 of the driver 20. Clamp 50 is generally a half-ring having a pair of screw holes 52, 54 at its ends. Inner wall 56 of clamp 50 is angled slightly, about 1.5°, (the angle shown in Figure 4 is exaggerated), and when the clamp 50 is in place in the driver 20, the narrowest portion of the wall 56 is disposed towards the upper end of the driver 20. Screws 58 hold clamp 50 in place on driver 20. As torque is applied to the screws 58, the clamp material is compressed so that the entire inner surface of the clamp 50 contacts the shaft. Clamp 50 is made of the same material and in the same manner as the driver 20, and as thermal expansion causes the shaft to grow, so will the clamp 50, without loss of sealing area.

The seal portion 60 of this embodiment is best shown in Figure 5. Seal portion 60 generally comprises a cylindrical sidewall 62, the inner diameter of which is slightly greater than the outer diameter of the sidewall 22 of the driver 20, as shown in Figure 2. Sidewall 62 has an inwardly disposed flange 64 around its top, and a pair of tab slots 66, 68 are disposed in the flange 64, 180° apart. A seal lip 70 having a sealing face 72 extends upwardly from the cylindrical sidewall 62 and the flange 64. Lip 70 is offset from the edge of sidewall 62. Around the inside of the seal portion 60 at its opposite end is an annular O-ring groove 74. O-ring seal 76 is placed in the groove 74 after the seal portion is made in the same manner as with the preferred embodiment.

As shown in Figures 1 and 2, the seal portion 60 is placed over the top of the driver 20. The driver tabs 40, 42 slide into the tab slots 66, 68 which assures that the seal portion 60 will rotate with the driver 20, and the top of the springs 48 contact the underside of the seal portion flange 64.

A portion of a pump 100 is shown generally in Figure 2. The pump 100 has a rotating shaft 102 and a ceramic collar 104 mounted around but spaced apart from the shaft 102.

Assembled seal 10 is slipped over the shaft 102. The dimensions of the seal are such that the inner diameter of the driver 20 and seal portion flange 64 are only slightly larger than the diameter of the shaft 102. The seal 10 is sealed to the shaft 102 by O-ring seal 46, and O-ring seal 76 prevents any leakage between the driver 20 and the seal portion 60. The seal 10 is held in place on the shaft 102 by clamp 50. Tightening the clamp screws 58 forces the angled wall 56 against the shaft from the position shown in Figure 2, and the seal 10 is held firmly in place without dimpling the shaft 102. This attachment is made close enough to the ceramic collar 104 so that the sealing surface 72 of the seal lip 70 is forced aginast the collar 104. As the shaft turns, the lip 70 rotates while the collar remains stationary, but as the lip 70 is mostly graphite, this interface is virtually frictionless.

The lip 70 will eventually wear down with use, but because the lip 70, as well as the rest of the seal portion 60 has substantial strength, and because the lip is longer than the effective length of the brittle graphite lips of conventional seals, the seal portion of this invention has a much longer useful life.

Other variations will occur to those skilled in the art.

## Claims

1. Mechanical seal, comprising
-a driver (20),
-a seal portion (60) and
-means (50) for attaching said seal to a shaft (102)
-arranged as not to dimple or mark the shaft (102),
characterized in that
-said means for attaching
-is a clamp (50)
-having an angled inner wall (56) and
-being connected to said driver (20) by adjustable means (58),
- the adjustment thereof forces said angled wall (56) against the shaft (102) so that said angled wall (56) deforms against the shaft (102) (Figs. 2, 4).

2. Mechanical seal of claim 2, characterized in that
-said clamp (50)
-is a half ring and
-said adjustable means
-comprises a pair of screws (58)
-which fit through the ends of said clamp (50) and into said driver (20) (Fig. 4).

3. Mechanical seal of claim 1 or 2, characterized in that
-said adjustable clamping means
-comprises a collar of carbon and resin compound.

FIG 1

FIG 2

**FIG 3**

**FIG 4**

**FIG 5**

FIG 6

FIG. 7

0 232 450

390
392
380
374
376
378
370
300
372

340
348
338
328
325
344
342
330
320
322
326
326
324

352
358
350
360
356

FIG. 8